# NEW EUROPEAN PATENT SPECIFICATION

(11) **EP 2 944 182 B2**
(45) Date of publication and mention of the opposition decision: **22.02.2023**
(45) Mention of the grant of the patent: 11.04.2018
(21) Application number: 14167981.1
(22) Date of filing: 12.05.2014
(51) Int. Cl.: A01F 29/12, A01D 43/08, A01D 43/14

(54) **Forage harvester with improved crop flow**
Feldhäcksler mit verbessertem Erntegutstrom
Ramasseuse-hacheuse comportant un flux de récolte amélioré

(43) Date of publication of application: 18.11.2015
(73) Proprietor: CNH Industrial Belgium nv, 8210 Zedelgem (BE)
(72) Inventor: Verhoye, Geert, 8020 Ruddervoorde (BE); Lagast, Jean-Pierre, 8210 Zedelgem (BE)
(74) Representative: Beetz, Joeri

(56) References cited:
- EP-A1- 1 518 453
- DE-A1- 1 692 448
- DE-A1- 3 727 156
- DE-A1-102007 013 715
- DE-A1-102009 002 102
- DE-B- 1 086 478
- DE-C2- 4 106 637
- GB-A- 1 063 288
- US-A- 3 392 770
- K. SHINNERS et al.: "Band Lubrification to Reduce Friction Loss in Forage Blowers", Transactions of the ASAE, vol. 34, no. 5, September 1991 (1991-09), pages 1962-1966,
- JOHN DEERE: "Forage Equipment", JOHN DEERE - Prospekt, 1984, pages 1-52,
- Harvest Tec.: "Model 676-M. For John Deere 7000 Series", Harvest Tec, - Owner's Manual, rev 01-08, 1 March 2006 (2006-03-01), pages 1-18,

## Description

### Field of the invention.

The present invention relates to harvesting equipment, in particular to a forage harvester for harvesting crop such as corn or grass.

It relates more particularly to the transport of crop that has been harvested towards a discharge spout.

### Background of the invention.

A forage harvester is usually equipped with a header for gathering crop of a field and providing the harvested crop to a cutting or chopping unit such as a chopper, a cutter drum or the like for reducing the size/length of the harvested crop to a desired size. Subsequently, the chopped or processed crop is transported/guided to a discharge section for discharging the cut crop to a container or trailer.

Typically, as illustrated in DE 102007013715 A1 and DE 3727156 A1, the flow of processed crop needs to pass through various sections of the discharge section before reaching an outlet. During the transport through the discharge section, the flow of chopped crop may need to undergo various changes in both the direction of flow and cross-section.

It has been observed that, at various positions along the flow path of the cut/chopped crop, there is a risk of so-called plug formation which may result in a (partial) blockage of the passage or section through which the cut crop has to be transported.

To improve the crop flow through the discharge spout, GB 1063288 A and DE 1086478 B propose to install blowers on the spout body for providing an upward air flow through the crop. Such arrangement enhances crop flow in the upper portion of the discharge section, but does not influence the occurrence of blockages in the lower portion.

Further, US 3392770 A suggests to spray some water on the crop entering the chopper. As the liquid is dispensed on top of the crop, the enhanced humidity only has a minor effect on the interaction between the crop and the plate below the cutterhead or the surface of the discharge section, where plug formation may start.

### Summary of the invention.

In order to at least partly mitigate the risk of a plug formation as mentioned, there is provided in an aspect of the present invention, a forage harvester for harvesting crop comprising:
a header for harvesting crop and providing the crop to a cutter drum of the harvester for cutting the crop;
a wear plate positioned in the vicinity of the cutter drum for guiding the cut crop towards a discharge section of the harvester,
characterized in that the harvester further comprises a flow generator for generating a fluid flow along a surface of the wear plate facing the cutter drum in order to facilitate a transport of the cut crop towards an outlet of the discharge section, and
the flow generator comprises a nozzle arrangement for providing the fluid flow, the nozzle arrangement comprising a plurality of nozzles arranged such that the fluid flow, when leaving the nozzles is at least partly directed downstream.

In accordance with an aspect of the present invention, there is provided a forage harvester for harvesting crop such as corn or grass. The harvester is provided with a header for harvesting the crop and providing the crop to a cutter drum. Typically, such a header can comprise a cutting member comprising one or more pairs of counter-rotating blades to remove, i.e. harvest the crop from the field. The harvested crop is then fed to a cutter drum (also referred to as cutter head) for reducing the size of the harvested crop. The cut crop (i.e. cut by the cutter drum) may then be transported to a discharge section of the harvester, in order to discharge the cut crop, e.g. towards a spout. In the harvester according to the present invention, there is a wear plate provided in the vicinity of the cutter drum for guiding the cut crop towards the discharge section. Typically, such a wear plate is located at least partly underneath the cutter drum. The wear plate further provides in a shielding of the cutter drum in order to ensure that the cutter drum is not damaged by obstacles that are present on the field. A such, the wear plate is typically a solid plate having a thickness of several mm, up to 1-2 cm. Due to the rotation of the cutter drum, the cut crop (i.e. diminished by the cutter drum) is ejected in substantially radial direction away from the cutter drum towards the wear plate and guided by the wear plate towards the discharge section. Such a discharge section is intended to transport the cut crop towards an outlet, e.g. provided with a spout, in order to discharge the cut crop into a container or the like. During the transport in the discharge section, the flow of cut crop may typically undergo various changes in both direction of flow and in cross-section. As a result, an important contacting may occur between the cut crop and the walls of the discharge section, i.e. the inner surfaces of the discharge section. It should be noted that a similar contacting occurs with the wear plate when the cut crop is ejected towards the wear plate.

It has been observed by the inventors that, as a result of this contacting, parts of the cut crop may stick or tend to stick to the inner surfaces of the discharge section or the surface of the wear plate facing the cutter drum. Such sticking of the cut crop to the wear plate or the discharge section may result in so-called plug formation, which may eventually result in a (partial) blockage of the passage towards the outlet of the discharge section. In particular when crop with a comparatively high sugar content, such as grass, is harvested, such plug formation may occur. As will be clear to the skilled person, the effect of such plug formation may adversely affect the effectiveness of the harvesting process and may even result in a down-time of the harvester, in case the harvester has to be stopped to remove the plug or plugs formed.

In order to mitigate the risk of such plug formation or sticking of the crop, the forage harvester according to the present invention is provided with a flow generator for generating a fluid flow along a surface of the wear plate facing the cutter drum. By doing so, a transport of the cut crop towards an outlet of the discharge section is facilitated. The fluid flow, e.g. a fluid comprising an air flow or a mixture of an air flow and a liquid, which is provided along the surface of the wear plate, can provide in a barrier between the cut crop and the surface, thus reducing the likelihood of the cut crop sticking to the surface and generating a plug formation.

In an embodiment, the fluid comprises compressed air which can be dry or humidified.

The fluid may further include other components such as inocculants or preservation additives.

According to the invention, the flow generator comprises a nozzle arrangement for supplying the fluid flow along the surface, the nozzle arrangement extending substantially along the entire width of the cutter drum.

In an embodiment, the forage harvester according to the invention can comprise a plurality of flow generators, arranged on either the wear plate or the discharge section or both. Typically, the cross-section of the discharge-section undergoes an important change in size, e.g. starting from a comparatively large cross-section at the inlet, i.e. where the cut crop enters the discharge section to a comparatively small cross-section at the outlet where the discharge section is e.g. connected or connectable to a spout for discharging the cut crop in a container.

Within the meaning of the present invention, downstream is used to denote a direction from the header (harvesting the crop) towards the outlet of the discharge section.

In an embodiment, the fluid flow is controlled by controlling a controllable valve in a conduit supplying the fluid flow. Such a conduit can e.g. be provided between an on-board tank comprising a component of the fluid (e.g. water) and a nozzle arrangement mounted to the wear plate. In such embodiment, a control unit may be provided to control the controllable valve.

In an embodiment, the fluid flow may comprise a pulsed fluid flow. By applying a pulsed fluid flow, the removal of crop sticking to a surface of the wear plate can be facilitated as it enables to exert important forces onto the crop. Further, compared to a more continuous application of a fluid flow, a smaller amount of fluid may be needed per unit of time.

In an embodiment, the forage harvester according to the invention may be provided with a sensor for generating a signal indicative of a plug formation. As an example, the sensor can comprise a pressure sensor for sensing a pressure or pressure difference along the wear plate. Alternatively, or in addition, a temperature sensor or other type of sensor can be applied.

In an embodiment, the harvester may be provided with further processing tools such as a pair of counter-rotating rolls or drums for breaking the kernels of the crop. Such a processing tool can e.g. be provided downstream of the cutter drum.

### Brief description of the drawings

Figure 1 schematically depicts a cross-sectional view of a forage harvester according to an embodiment of the invention.
Figure 2 schematically depicts a cross-sectional view of a cutter drum and wear plate as can be applied in a forage harvester according to a first embodiment of the present invention.
Figure 3 schematically depicts a top-view of a wear plate and a flow generator as can be applied in a forage harvester according to the invention.
Figure 4 schematically depicts a cross-sectional view of a cutter drum and wear plate as can be applied in a forage harvester according to a second embodiment of the present invention.
Figure 5 schematically depicts a more detailed cross-sectional view of a discharge section of a forage harvester according to an embodiment of the invention.

### Detailed description

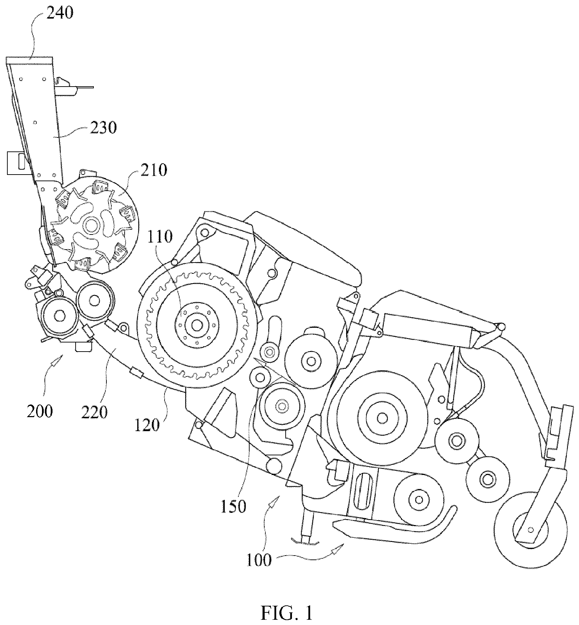

In Figure 1, an embodiment of a forage harvester according to an embodiment of the present invention is schematically shown. The forage harvester comprises a header 100 for harvesting a crop such as grass or corn. The harvested crop is subsequently transported by the header towards a cutter drum 110, as indicated by the arrow 150. The harvested crop is cut (reduced in size) by the cutter drum and ejected towards a wear plate 120, which is, in the arrangement as shown, arranged substantially below the cutter drum 110. By means of the wear plate 120, the cut crop (i.e. cut by the cutter drum 110) is directed / guided towards the discharge section 200 of the harvester. In the embodiment as shown, the discharge section comprises a first discharge section 220 (also referred to as the concave), a blower 210 downstream of the concave, and a second discharge section 230 having an outlet 240 which can e.g. be connected to a spout (not shown).

In accordance with the present invention, the wear plate is provided with a flow generator for generating a fluid flow along either a surface of the wear plate 120 facing the cutter drum 110 or along an inner discharge surface of the discharge section, in order to facilitate the propagation of the cut crop towards the outlet 240 of the discharge section.

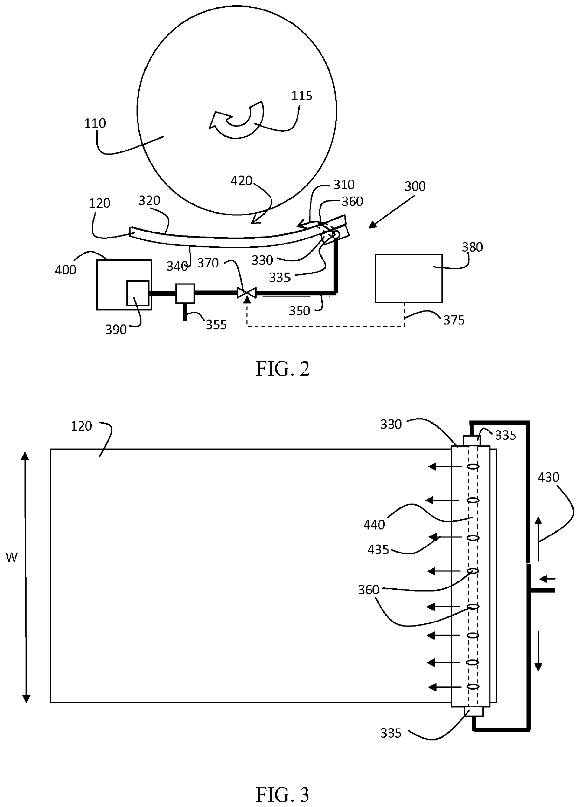

In Figure 2, a more detailed view of the cutter drum 110, a rotational direction of the cutter drum being indicated by the arrow 115 and wear plate 120 is shown, including a flow generator 300 for generating a fluid flow (indicated by the arrow 310) along a top surface 320 (also referred to as the inner wear plate surface) of the wear plate 120 facing the cutter drum 110. In the embodiment as shown, the flow generator 300 comprises a nozzle arrangement 330 that is mounted to a bottom (or outer) surface 340 of the wear plate, the nozzle arrangement comprising an inlet 335 for receiving a fluid via a conduit 350 and a plurality of nozzles or jets 360 arranged to provide the fluid, via orifices or protrusions of the wear plate, to flow along the surface 320 facing the cutter drum.

Note that, as an alternative, the nozzle arrangement 330 may also be mounted to the inner wear plate surface 320, thereby eliminating the need to provide protrusions through the wear plate.

Due to the application of the fluid flow along the inner wear plate surface 320, crop which has been cut by the cutter drum 110 and which is ejected by the drum towards the wear plate may no longer stick to the wear plate, thus reducing the risk of plug formation in the region 420 between the cutter drum and the wear plate.

In an embodiment, the nozzles 360 of the nozzle arrangement are arranged such that the fluid flow, when leaving the nozzles, has a component in the downstream direction (the downstream direction being the direction from the header (harvesting the crop) towards the outlet of the discharge section).

In an embodiment, the flow generator 300 comprises a controllable valve 370 arranged to control the flow of fluid through the conduit 350. In an embodiment, the controllable valve is controlled (indicated by the dotted line 375) by a control unit 380 of the flow generator.

In an embodiment, the fluid flow may comprises an air flow, e.g. provided by a compressor 390 powered by an engine 400 of the harvester.

The fluid flow may, as an alternative, or in addition, comprise one or more liquid components (e.g. introduced via a further conduit 355) such as water. The fluid flow may further comprise other additives such as inocculants or preservation additives.

In an embodiment, the control unit 380 is arranged to control the valve 370 to generate a pulsed fluid flow. By doing so, the fluid flow may exert a force (directed in the downstream direction) on any crop that may tend to stick or adhere to the wear plate 120 and as such, avoid or mitigate the formation of a plug or plugs.

In Figure 3, a top view of a wear plate 120 as can be applied in an embodiment of the forage harvester according to the present invention is schematically shown. Compared to the embodiment of Figure 2, the nozzle arrangement 330 is mounted to the upper surface (the surface facing the cutter drum) of the wear plate 120. The nozzle arrangement 330 comprises a first and second inlet 335 for receiving a fluid flow (indicated by the arrows 430) and providing the fluid flow via an internal conduit 440 to a plurality of nozzles 360 arranged along the width W of the wear plate.

In an embodiment, the nozzles 360 are arranged in such manner that a fluid flow 435 leaving the nozzles 360 is directed substantially parallel to the upper surface of the wear plate.

By the application of the fluid flow along the inner surface of the wear plate (as illustrated in both Figures 2 and 3), a fluid barrier can be generated between the cut crop ejected from the cutter drum and the surface, thus reducing the likelihood of the cut crop sticking to the surface and generating a plug or plugs.

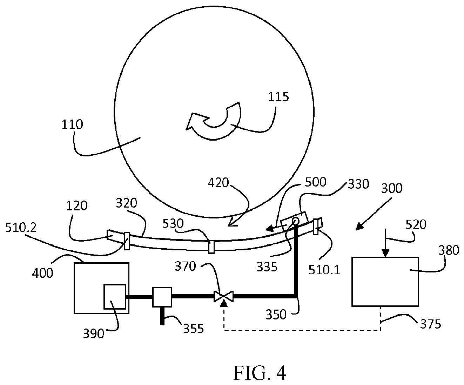

In an embodiment of the present invention, one or more sensors can be provided for generating a signal indicative of a plug formation. Such an embodiment is schematically shown in Figure 4.

As can be seen, the embodiment of Figure 4 corresponds to the embodiment as shown in Figure 2, apart from the following:

In the arrangement of Figure 4, the nozzle arrangement 330 is mounted to the inner wear plate surface 320 (similar to the embodiment of Figure 3) and is arranged to provide a fluid flow 500 (provided via conduit 350 to an inlet 335 of the nozzle arrangement) essentially parallel to the surface 320. The embodiment as shown further comprises a sensor arrangement 510 for providing a sensor signal 520 indicative of a plug formation. In the embodiment as shown, the sensor arrangement comprises a first pressure sensor 510.1 arranged to detect a pressure at a position upstream of the region 420, i.e. the region where plug formation most likely to occur, and a second pressure sensor 510.2 arranged to detect a pressure at a position downstream of the region 420. In an embodiment, the sensor signal 520, e.g. including signals representing the pressure levels as measured by the sensors 510.1 and 510.2, is provided to the control unit 380 controlling the valve, for controlling an operation of the valve. In the arrangement as shown, the occurrence of a pressure difference between the pressures as sensed by the sensors 510.1 and 510.2 may be an indication of the occurrence of a plug forming in the region 420 between the cutter drum and the wear plate 120. As such, an operation of the valve 370 may be based on the pressure difference.

Note that, as an alternative to the application of a pair of sensors, the application of a single pressure sensor may also provide a signal that may be indicative of a plug formation. Depending on the location of such a single sensor, e.g. upstream or downstream of the region 420, an increase or decrease of the pressure sensed (which can e.g. be derived by the control unit 380) may be an indication of plug formation occurring.

As an alternative, or in addition to the use of one or more pressure sensors, other types of sensors may be applied as well. In the embodiment shown in Figure 4, a temperature sensor 530 is mounted to the wear plate to measure a temperature of the wear plate, e.g. near the region 420. During normal operation, the cut crop, ejected by the cutter drum, is transported in the downstream direction, while (either continuous or pulsed) the fluid flow 500 provides in a barrier between the cut crop and the wear plate 120, in order to avoid sticking of the crop to the wear plate. Given such conditions, one may expect the temperature as sensed by the sensor 530 to remain substantially constant, or at least proportional to e.g. an ambient temperature or a temperature of the fluid provided. In case a discrepancy in the sensed temperature occurs, this can be considered an indication of the occurrence of plug formation in the region 420.

As an example of yet another type of sensor which may be applied, an acoustic sensor can be mentioned. Such a sensor may also provide a signal indicative of the occurrence of a plug formation because the occurrence of a plug of crop (at least partly) blocking the passage of the cut crop through the region 420 may change the acoustic properties of e.g. the wear plate 120.

As mentioned, the signal as obtained from the sensor arrangement, (including any type of sensor suitable to generate a signal indicative of a plug formation), can be used by a control unit 380 for controlling the fluid flow, e.g. by controlling a valve in a conduit providing the fluid flow to a nozzle arrangement.

As an alternative, the sensor signal, or a signal derived thereof, may be used to issue a warning signal (e.g. a visual signal or an audio signal) to the operator of the harvester. Once such a signal is issued, the operator may then manually initiate the application of the fluid flow.

As mentioned, the risk of plug formation may also occur in the discharge section of the harvester, the discharge section being located downstream of the cutter drum and wear plate.

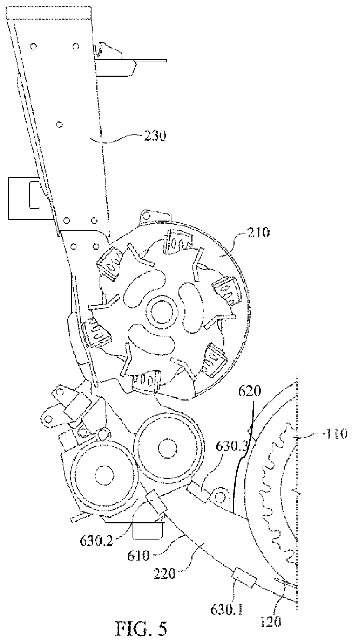

In Figure 5, a more detailed cross-sectional view on the discharge section of the forage harvester of Figure 1 is schematically shown. Figure 5 schematically shows part of the cutter drum 110 and wear plate 120 as e.g. shown in Figure 1, and the discharge section comprising a first discharge section 220 (also referred to as the concave), a blower 210 and a second discharge section 230, downstream of the blower 210.

The first discharge section is further provided with a three flow generators (630.1, 630.2 and 630.3). The flow generators, which can e.g. include a nozzle arrangement 330 as e.g. shown in Figures 2 or 4, are mounted to the bottom wall 610 of the concave section 220 (flow generators 630.1 and 630.2) and the top wall 620 of the concave section 220 (flow generator 630.3).

In an embodiment, a fluid flow as provided by each of the flow generators can be controlled independently, e.g. by controlling a flow through a conduit (not shown) to the different flow generators in a manner as described above. Alternatively, two or more flow generators can be connected to a common conduit and controlled simultaneously.

In a similar manner as illustrated in Figure 4, one or more sensors (not shown) can be provided on the discharge section in order to provide a signal indicative of the occurrence of a plug formation.

In an embodiment, a flow generator is provided along substantially the entire circumference of the discharge section, i.e. the flow generator may also extend along walls of the discharge section in plane with the drawing. In such arrangement, nozzle arrangements can be provided on either inner surfaces of the walls of the discharge section (e.g. the concave 220) or outer surfaces of the walls. In the latter case, protrusions are provided through the walls of the discharge section for guiding the fluid flow towards the inner surfaces of the discharge section.

In a similar manner as discussed above, one or more flow generators can be provided on the second discharge section 230, downstream of the blower 210.

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting, but rather, to provide an understandable description of the invention.

The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language, not excluding other elements or steps). Any reference signs in the claims should not be construed as limiting the scope of the claims or the invention.

## Claims

1. A forage harvester for harvesting crop comprising:
a header (100) for harvesting crop and providing the crop to a cutter drum (110) of the harvester for cutting the crop;
a wear plate (120) positioned in the vicinity of the cutter drum (110) to guide the cut crop towards a discharge section (200) of the harvester,
**characterized in that** the harvester further comprises a flow generator (300) for generating a fluid flow (310/500) along a surface (320) of the wear plate (120) facing the cutter drum (110), in order to facilitate a transport of the cut crop towards an outlet (240) of the discharge section (200), and
the flow generator (300) comprises a nozzle arrangement (330) for providing the fluid flow (310/500), the nozzle arrangement (330) comprising a plurality of nozzles (360) arranged such that the fluid flow (310/500), when leaving the nozzles (360) is at least partly directed downstream.

2. The forage harvester according to claim 1 wherein the flow generator (300) is provided on an upstream end section of the wear plate (120).

3. The forage harvester according to any of the preceding claims wherein the flow generator (300) extends along a width (W) of the cutter drum (110).

4. The forage harvester according to any of the preceding claims wherein the discharge section (200) comprises a concave (220), arranged downstream of the wear plate (120).

5. The forage harvester according to any of the preceding claims wherein the fluid flow (310/500) comprises an air flow or a mixture of air and a liquid such as water.

6. The forage harvester according to any preceding claim wherein the flow generator (300) further comprises a compressor (390).

7. The forage harvester according to any preceding claim wherein the flow generator (300) further comprises an on-board tank for storing a liquid for generating the fluid flow (310/500).

8. The forage harvester according to claim 7, wherein the flow generator (300) further comprises a nozzle arrangement (330) mounted to the wear plate (120), a conduit (355) connecting the on-board tank to the nozzle arrangement (330) and a controllable valve (370) for controlling the fluid flow to the nozzle arrangement (330).

9. The forage harvester according to claim 8, further comprising a control unit (380) for controlling an operation of the controllable valve (370), a sensor (510/530) for generating a signal indicative of a plug formation and wherein the control unit (380) is arranged to receive the signal and control the operation of the controllable valve (370) based on the signal.

10. The forage harvester according to claim 9, wherein the control unit (380) is operable to control the operation of the controllable valve (370) to provide in a pulsed fluid flow (310/500).

11. The forage harvester according to claim 9 or 10, wherein the sensor comprises a pressure sensor (510) or a temperature sensor (530).

## Patentansprüche

1. Feldhäcksler zum Häckseln von Erntegut, umfassend:
einen Mähwerk (100) zum Häckseln von Erntegut und Bereitstellen des Ernteguts an eine Schneidertrommel (110) des Häckslers zum Schneiden des Ernteguts;
eine Verschleißplatte (120), die in der Nähe der Schneidertrommel (110) positioniert ist, um das geschnittene Erntegut zu einem Abgabebereich (200) des Häckslers zu führen,
**dadurch gekennzeichnet, dass** der Häcksler ferner einen Strömungsgenerator (300) zum Generieren einer Fluidströmung (310/500) entlang einer Oberfläche (320) der Verschleißplatte (120) umfasst, die der Schneidertrommel (110) zugewandt ist, um einen Transport des geschnittenen Ernteguts zu einem Auslass (240) des Abgabebereichs (200) zu erleichtern, und
der Strömungsgenerator (300) eine Düsenanordnung (330) zum Bereitstellen der Fluidströmung (310/500) umfasst, die Düsenanordnung (330) umfassend eine Vielzahl von Düsen (360), die derart angeordnet ist, dass die Fluidströmung (310/500), wenn sie die Düsen (360) verlässt, mindestens teilweise stromabwärts gerichtet ist.

2. Feldhäcksler nach Anspruch 1, wobei der Strömungsgenerator (300) an einem stromaufwärtigen Endbereich der Verschleißplatte (120) bereitgestellt ist.

3. Feldhäcksler nach einem der vorstehenden Ansprüche, wobei sich der Strömungsgenerator (300) entlang einer Breite (W) der Schneidertrommel (110) erstreckt.

4. Feldhäcksler nach einem der vorstehenden Ansprüche, wobei der Abgabebereich (200) einen Rundhöhlung (220) umfasst, der stromabwärts der Verschleißplatte (120) angeordnet ist.

5. Feldhäcksler nach einem der vorstehenden Ansprüche, wobei die Fluidströmung (310/500) eine Luftströmung oder eine Mischung aus Luft und einer Flüssigkeit wie Wasser umfasst.

6. Feldhäcksler nach einem der vorstehenden Ansprüche, wobei der Strömungsgenerator (300) ferner einen Verdichter (390) umfasst.

7. Feldhäcksler nach einem der vorstehenden Ansprüche, wobei der Strömungsgenerator (300) ferner einen eingebauten Tank zum Speichern einer Flüssigkeit zum Generieren der Fluidströmung (310/500) umfasst.

8. Feldhäcksler nach Anspruch 7, wobei der Strömungsgenerator (300) ferner eine Düsenanordnung (330) umfasst, die an der Verschleißplatte (120) montiert ist, wobei eine Leitung (355) den eingebauten Tank mit der Düsenanordnung (330) und einem steuerbaren Ventil (370) zum Steuern der Fluidströmung zu der Düsenanordnung (330) verbindet.

9. Feldhäcksler nach Anspruch 8, ferner umfassend eine Steuereinheit (380) zum Steuern eines Betriebs des steuerbaren Ventils (370), eines Sensors (510/530) zum Generieren eines Signals, das eine Stopfenbildung angibt, und wobei die Steuereinheit (380) angeordnet ist, um das Signal zu empfangen und den Betrieb des steuerbaren Ventils (370) basierend auf dem Signal zu steuern.

10. Feldhäcksler nach Anspruch 9, wobei die Steuereinheit (380) betreibbar ist, um den Betrieb des steuerbaren Ventils (370) zu steuern, um in einer gepulsten Fluidströmung (310/500) bereitzustellen.

11. Feldhäcksler nach Anspruch 9 oder 10, wobei der Sensor einen Drucksensor (510) oder einen Temperatursensor (530) umfasst.

## Revendications

1. Récolteuse-hacheuse destiné à récolter des cultures comprenant :
un bec cueilleur (100) pour récolter des cultures et fournir la récolte à un tambour de coupe (110) de la récolteuse pour couper la culture ;
une plaque d'usure (120) positionnée à proximité du tambour de coupe (110) pour guider la culture coupée vers une section de décharge (200) de la récolteuse,
**caractérisée en ce que** la récolteuse comprend en outre un générateur de flux (300) pour générer un écoulement de fluide (310/500) le long d'une surface (320) de la plaque d'usure (120) faisant face au tambour de coupe (110), afin de faciliter un transport de la culture coupée vers une sortie (240) de la section de décharge (200), et
le générateur de flux (300) comprend un agencement de buse (330) pour fournir l'écoulement de fluide (310/500), l'agencement de buse (330) comprenant une pluralité de buses (360) agencées de telle sorte que l'écoulement de fluide (310/500), lorsqu'il quitte les buses (360), est au moins partiellement dirigé en aval.

2. Récolteuse-hacheuse selon la revendication 1, dans laquelle le générateur de flux (300) est fourni sur une section d'extrémité amont de la plaque d'usure (120).

3. Récolteuse-hacheuse selon l'une quelconque des revendications précédentes, dans laquelle le générateur d'écoulement (300) s'étend le long d'une largeur (W) du tambour de coupe (110).

4. Récolteuse-hacheuse selon l'une quelconque des revendications précédentes, dans laquelle la section de décharge (200) comprend une concave (220), agencée en aval de la plaque d'usure (120).

5. Récolteuse-hacheuse selon l'une quelconque des revendications précédentes, dans laquelle l'écoulement de fluide (310/500) comprend un flux d'air ou un mélange d'air et un liquide tel que de l'eau.

6. Récolteuse-hacheuse selon l'une quelconque des revendications précédentes, dans laquelle le générateur de flux (300) comprend en outre un compresseur (390).

7. Récolteuse-hacheuse selon l'une quelconque des revendications précédentes, dans laquelle le générateur de flux (300) comprend en outre un réservoir de bord pour stocker un liquide afin de générer l'écoulement de fluide (310/500).

8. Récolteuse-hacheuse selon la revendication 7, dans laquelle le générateur de flux (300) comprend en outre un agencement de buse (330) monté sur la plaque d'usure (120), un conduit (355) reliant le réservoir de bord à l'agencement de buse (330) et une soupape commandable (370) pour commander l'écoulement de fluide vers l'agencement de buse (330).

9. Récolteuse-hacheuse selon la revendication 8, comprenant en outre une unité de commande (380) pour commander un fonctionnement de la soupape commandable (370), un capteur (510/530) pour générer un signal indicatif d'une formation de bouchon et l'unité de commande (380) étant agencée pour recevoir le signal et commander le fonctionnement de la soupape commandable (370) sur la base du signal.

10. Récolteuse-hacheuse selon la revendication 9, dans laquelle l'unité de commande (380) peut fonctionner pour commander le fonctionnement de la soupape commandable (370) afin de fournir dans un écoulement de fluide pulsé (310/500).

11. Récolteuse-hacheuse selon la revendication 9 ou 10, dans laquelle le capteur comprend un capteur de pression (510) ou un capteur de température (530).
